# EUROPÄISCHE PATENTSCHRIFT

(11) **EP 1 810 842 B1**
(45) Veröffentlichungstag und Bekanntmachung des Hinweises auf die Patenterteilung: **26.08.2009**
(21) Anmeldenummer: 06001419.8
(22) Anmeldetag: 24.01.2006
(51) Int. Cl.: B42F 5/00, B42D 15/00

(54) **Fotoalbum**
Photo album
Album photo

(43) Veröffentlichungstag der Anmeldung: 25.07.2007
(73) Patentinhaber: Papierverarbeitung Gnadau GmbH & Co. KG, 39249 Gnadau (DE)
(72) Erfinder: Hunke, Marie-Luise, 58640 Iserlohn (DE)
(74) Vertreter: Grünecker, Kinkeldey, Stockmair & Schwanhäusser Anwaltssozietät

(56) Entgegenhaltungen:
- WO-A-93/21086
- DE-U- 9 102 986
- JP-A- 2001 122 375
- US-A1- 2002 056 986
- US-A1- 2002 089 168
- PATENT ABSTRACTS OF JAPAN Bd. 2003, Nr. 12, 5. Dezember 2003 (2003-12-05) & JP 2004 035089 A (KOKUYO CO LTD), 5. Februar 2004 (2004-02-05)
- PATENT ABSTRACTS OF JAPAN Bd. 2002, Nr. 08, 5. August 2002 (2002-08-05) & JP 2002 114287 A (FUKUNAGA JUNICHI), 16. April 2002 (2002-04-16)

## Beschreibung

Die Erfindung betrifft ein Fotoalbum mit einer Vielzahl von zwischen zwei Deckeln angeordneten, zum Befestigen von Fotos, insbesondere von ausgedruckten Digitalfotos dienenden Kartonblättem.

Digitalfotos werden regelmäßig auf scheibenförmigen Datenträgern wie CDs oder DVDs gespeichert, zu deren Ablage diverse Mittel wie Kästen, Taschen und Hüllen aus durchsichtigem Kunststoff zur Verfügung stehen. In Fällen, in denen Digitalfotos ausgedruckt und in ein Fotoalbum eingeklebt werden, besteht ein Bedürfnis, den das ausgedruckte Bild enthaltenden Datenträger ebenfalls im Album unterzubringen. Dies ist in der Praxis bisher allenfalls bei Alben in Ringbuchform möglich, indem man beispielsweise in die Ringmechanik des Albums eine aus Polypropylen bestehende CD-Hülle einheftet, wie sie auf dem Bürosektor in Verbindung mit zur Ablage von CD-Hüllen geeigneten Ringbüchern verwendet werden. Da die Träger für die ausgedruckten Fotos regelmäßig aus Karton bestehen, stellt eine derartige CD-Hülle in einem Album der in Betracht gezogenen Art einen Fremdkörper dar, dessen Hinnahme zudem nur dann in Betracht kommt, wenn das Album nach Art eines Ringbuches und nicht als gebundenes Album ausgebildet ist. US 2002/0089168 zeigt ein Buch mit Kartonblättern, die Schlitze aufweisen zum Hälten von Fotos oder einer CD.

Der Erfindung liegt die Aufgabe zugrunde, ein Fotoalbum zu schaffen, das auch in gebundener Form eine Ablagemöglichkeit für einen oder auch mehrere scheibenförmige Datenträger bietet. Gelöst wird diese Aufgabe bei einen Album der in Betracht gezogenen Art erfindungsgemäß dadurch, dass es mit mindestens einem zusätzlichen Kartonblatt ausgestattet ist, das mindestens eine zur Aufbewahrung eines scheibenförmigen Datenträgers bestimmte Halterung aufweist, die von drei oder mehr zu einem gemeinsamen Zentrum gerichteten, gestanzten Haltezungen zur Befestigung des Datenträgers gebildet wird, wobei die Haltezungen von einer kreisförmigen Prägelinie ausgehen und der Durchmesser des die Prägelinie bildenden Kreises geringfügig größer als der Außendurchmesser des Datenträgers ist.

Durch die Art der Ausbildung der Haltezungen und deren Anordnung ist ein sicherer Sitz des scheibenförmigen Datenträgers am für seine Ablage bestimmten Kartonblatt gewährleistet.

Die gekrümmte Prägelinie wird von einem Kreis gebildet, dessen Durchmesser nur geringfügig, d. h. maximal 5 mm, größer ist als der Durchmesser des Datenträgers.

Um das Ablegen und Entnehmen des jeweiligen Datenträgers zu erleichtern, empfiehlt es sich, im Zentrum des die Prägelinie bildenden Kreises ein der zentralen Aufnahmeöffnung des Datenträgers entsprechendes Loch anzubringen.

Weitere vorteilhafte Ausführungen der Erfindung sind in den Unteransprüchen definiert.

Weitere Einzelheiten der Erfindung ergeben sich aus der nachstehenden Beschreibung einer in der beigefügten Zeichnung dargestellten Ausführungsform der Erfindung. Es zeigen:

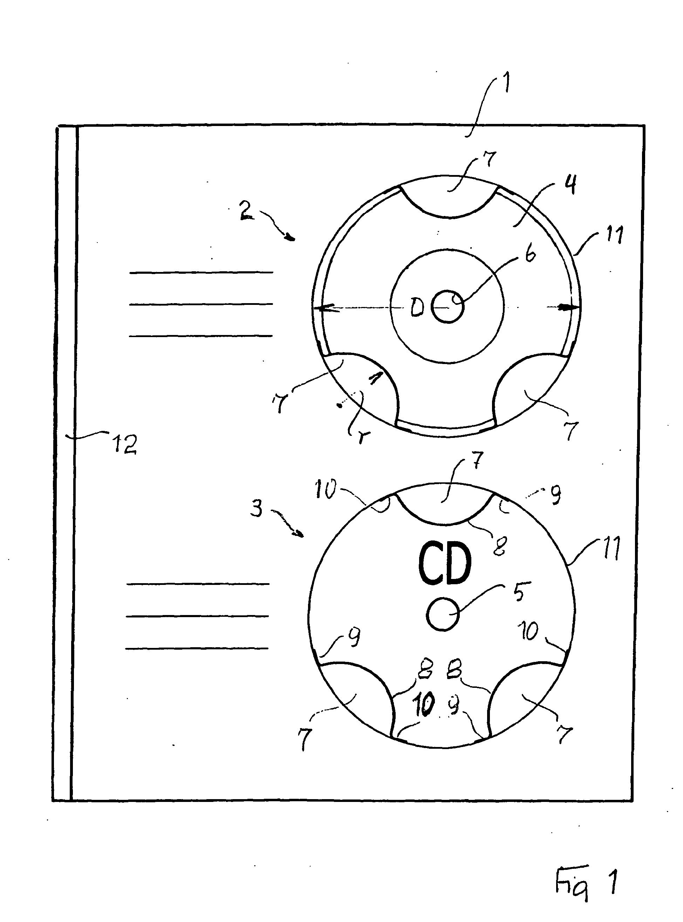

- Fig. 1: die Draufsicht auf ein Kartonblatt mit zwei Halterungen für CDs, von denen die obere eine CD hält und
- Fig. 2: ein Fotoalbum mit einem eingeklebten Kartonblatt gemäß Figur 1.

In den Figuren ist 1 ein Kartonblatt, das mit zwei Halterungen 2 und 3 für CDs ausgestattet ist, von denen die obere zur Veranschaulichung mit einer mit 4 bezeichneten CD bestückt ist. Die Halterungen 2 und 3 sind mit einem zentralen Loch 5 versehen, das mit dem zentralen Loch 6 der CD fluchtet. Jede der beiden Halterungen 2 und 3 weist drei Haltezungen 7 auf, deren Kontur durch ein zu ihrer Herstellung verwendetes, zum Prägen und Schneiden geeignetes Bandstahlwerkzeug bestimmt wird. Die Schnittlinien 8 des Werkzeuges gehen an ihren Enden 9 und 10 in eine nach Art einer schwachen Nut ausgebildete Prägelinie über. Die Prägelinie 11 hat die Form eines Kreises mit einem Durchmesser D, der nur geringfügig größer ist als der Durchmesser der CD. Die Kreisform der Prägelinie 11 begünstigt nicht nur den Sitz der CD, sondern auch die Steifigkeit der Haltezungen 7.

Die dem Zentrum der Halterungen 2, 3 zugewandten Abschnitte der Haltezungen 7 haben einen Krümmungsradius r, dessen Größe in etwa einem Fünftel des Durchmessers D der Prägelinie 11 entspricht.

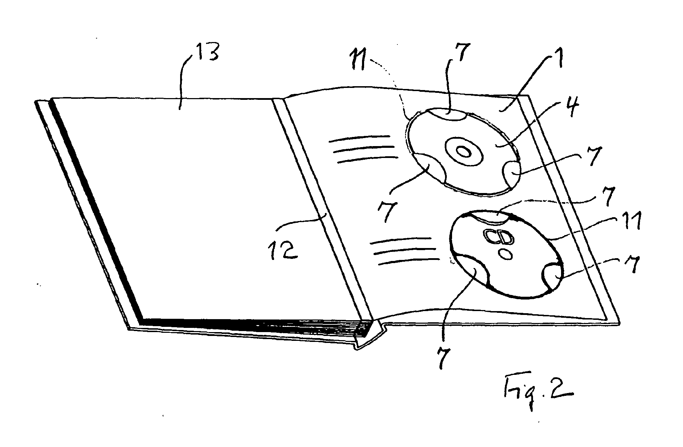

Um das Kartonblatt 1 in einem in Figur 2 dargestellten Fotoalbum befestigen zu können, ist es mit einem Falz 12 versehen, der die Verbindung des Kartonblattes 1 mit dem vorangehenden, letzten, zur Aufnahme von Fotos vorgesehen Blatt 13 ermöglicht.

## Patentansprüche

1. Fotoalbum mit einer Vielzahl von zwischen zwei Deckeln angeordneten, zum Befestigen von Fotos, insbesondere von ausgedruckten Digitalfotos dienenden Kartonblättem, **dadurch gekennzeichnet, dass** es mit mindestens einem zusätzlichen Kartonblatt (1) ausgestattet ist, das mindestens eine zur Aufbewahrung eines scheibenförmigen Datenträgers (4) bestimmte Halterung (2, 3) aufweist, die von drei oder mehr zu einem gemeinsamen Zentrum gerichteten, gestanzten Haltezungen (7) zur Befestigung des Datenträgers (4) gebildet wird, wobei die Haltezungen (7) von einer kreisförmigen Prägelinie (11) ausgehen und der Durchmesser des die Prägelinie (11) bildenden Kreises geringfügig größer als der Außendurchmesser des Datenträgers (4) ist.

2. Fotoalbum nach Anspruch 1, **dadurch gekennzeichnet, dass** der Durchmesser der Prägelinie (11) maximal 5 mm größer ist als der Durchmesser des Datenträgers (4).

3. Fotoalbum nach einem der Ansprüche 1 bis 2, **dadurch gekennzeichnet, dass** die zum Zentrum der Halterung (2, 3) gerichteten Haltezungen (7) eine bogenförmige Kontur haben.

4. Fotoalbum nach Anspruch 3, **dadurch gekennzeichnet, dass** die Kontur der Haltezungen (7) die Form eines Kreisabschnittes hat, dessen Radius (r) im Wesentlichen einem Fünftel des Durchmessers (D) der kreisförmigen Prägelinie (11) entspricht.

5. Fotoalbum nach einem der Ansprüche 1 bis 4, **dadurch gekennzeichnet, dass** im Zentrum des die Prägelinie (11) bildenden Kreises ein der zentralen Aufnahmeöffnung (6) des Datenträgers (4) entsprechendes Loch (5) angeordnet ist.

6. Fotoalbum nach einem der Ansprüche 1 bis 5, **dadurch gekennzeichnet, dass** das zusätzliche Kartonblatt (1) mit einem Falz (12) zum Einkleben in das Album versehen ist.

## Claims

1. Photograph album with a plurality of cardboard sheets, disposed between two covers, serving for attaching photographs, in particular printed digital photographs **characterized in that** it is provided with at least one additional cardboard sheet (1) which has at least one holder (2, 3) destined for storing a disc-shaped data carrier (4) formed by three or more punched retaining flaps (7) directed towards a common centre for attaching the data carrier (4), and the retaining flaps (7) extend out from a circular embossed line (11) and the diameter of the circle forming the embossed line (11) is slightly bigger than the external diameter of the data carrier (4).

2. Photograph album as claimed in claim 1, **characterized in that** the diameter of the embossed line (11) is at most 5 mm bigger than the diameter of the data carrier (4)..

3. Photograph album as claimed in one of claims 1 to 2, **characterized in that** the retaining flaps (7) directed towards the centre of the holder (2, 3) have an arc-shaped contour.

4. Photograph album as claimed in claim 3, **characterized in that** the contour of the retaining flaps (7) is in the shape of a segment of a circle, the radius (r) of which essentially corresponds to one fifth of the diameter (D) of the circular embossed line (11).

5. Photograph album as claimed in one of the claims 1 to 4, **characterized in that** a hole (5) corresponding to the central receiving orifice (6) of the date carrier (4) is disposed at the centre of the circle forming the embossed line (11).

6. Photograph album as claimed in one of claims 1 to 5, **characterized in that** the additional cardboard sheet (1) is provided with a fold (12) for sticking into the album.

## Revendications

1. Album de photos avec un grand nombre de pages en carton qui sont disposées entre deux couvertures et qui servent à fixer des photos, en particulier des photos numériques imprimées, **caractérisé en ce qu'**il est pourvu d'au moins une page en carton supplémentaire (1) comportant au moins une attache (2, 3) qui est prévue pour le rangement d'un support de données en forme de disque (4) et qui est formée par trois pattes de fixation (7), ou plus, découpées, dirigées vers un centre commun et destinées à la fixation du support de données (4), les pattes de fixation (7) partant d'une ligne de gaufrage circulaire (11) et le diamètre du cercle formé par la ligne de gaufrage (11) étant légèrement supérieur au diamètre extérieur du support de données (4).

2. Album de photos selon la revendication 1,
**caractérisé en ce que** le diamètre de la ligne de gaufrage (11) fait au maximum 5 mm de plus que le diamètre du support de données (4).

3. Album de photos selon l'une des revendications 1 à 2, **caractérisé en ce que** les pattes de fixation (7) dirigées vers le centre de l'attache (2, 3) ont un contour courbe.

4. Album de photos selon la revendication 3,
**caractérisé en ce que** le contour des pattes de fixation (7) a la forme d'un segment de cercle dont le rayon (r) correspond globalement à un cinquième du diamètre (D) de la ligne de gaufrage circulaire (11).

5. Album de photos selon l'une des revendications 1 à 4, **caractérisé en ce qu'**il est prévu, au centre du cercle formant la ligne de gaufrage (11), un trou (5) qui correspond à l'ouverture de réception centrale (6) du support de données (4).

6. Album de photos selon l'une des revendications 1 à 5, **caractérisé en ce que** la page en carton supplémentaire (1) est pourvue d'un onglet (12) pour être collée dans l'album.
